# EUROPEAN PATENT SPECIFICATION

(11) **EP 3 019 029 B1**
(45) Date of publication and mention of the grant of the patent: **05.08.2020**
(21) Application number: 14741383.5
(22) Date of filing: 12.06.2014
(51) Int. Cl.: A47J 27/18, A23L 5/10

(54) **APPARATUS FOR COOKING A SHEET OF PASTA DOUGH**
VORRICHTUNG ZUM KOCHEN EINER SCHICHT PASTATEIG
APPAREIL DE CUISSON D'UNE FEUILLE DE PÂTES

(30) Priority: 13.06.2013 IT PR20130050
(43) Date of publication of application: 18.05.2016
(73) Proprietor: Storci S.p.A., 43044 Collecchio (PR) (IT)
(72) Inventor: SERVENTI, Alberto, 43044 Collecchio (Parma) (IT)
(74) Representative: Guareschi, Antonella
(86) International application number: PCT/IB2014/062155
(87) International publication number: WO 2014/199324

(56) References cited:
- EP-A1- 1 155 625
- GB-A- 710 866
- IT-B- 1 244 823
- JP-U- S4 923 576
- US-A- 2 463 112
- US-A- 3 885 056

## Description

### FIELD OF APPLICATION OF THE INVENTION

The present finding is inserted in the field of industrial apparatuses for cooking sheet of pasta dough and more precisely relates to a continuous cooker device.

### STATE OF THE ART

Cooker devices for cooking sheet of pasta dough are known. The devices of the prior art comprise at least one belt made of plastic mesh (unichain - intralox) or stainless steel which carry the sheet of pasta dough - in advancement - inside a tank containing boiling water by means of heat exchanger systems.

Relevant prior art is disclosed in EP 1 155 625 A1 describing a method for heat treating a continuous strand of food product and apparatus adapted therefore. Furthermore, JP S49 23576 U discloses an apparatus for boiling a string of noodles.

A first drawback of the prior art is given by the fact that since the transport system is immersed in the tank, it is hard to clean; in addition, over time the starch infiltrates between the meshes and it is necessary to frequently replace both the chains and the belt parts, and in any case the total replacement of the transport unit is required at least once a year.

In addition, systems like those described do not even allow partial lifting of the belt in order to facilitate the cleaning, but rather the complete extraction of the belt is necessary.

Another drawback is relative to the heating system, since currently the following are used:
- heat exchangers outside the tank plus recirculation pump or
- exchangers immersed in the tank
- systems of direct injection of vapor into the tank

In the first case, one must insert water in the tank with recirculation pump and create turbulence that tends to move the sheet of pasta dough; in the second case, the starch encrusts the exchanger, which prevents the cleaning; in the third case, direct vapor, it is necessary to use sanitary vapor, and in addition this creates turbulence and causes movements of the sheet of pasta dough.

Further drawback of the prior art is given by the fact that the return of the conveyor belt occurs in the cooking tank itself; in addition, above all for the large-size tanks, there are different foam/starch concentrations between the zones close to the overflow point and those far from this point.

In any case, the cleaning of the system is not optimal, not even with the belts lifted, due to the greater difficulty in accessing the tank (due to the presence of the belts, even if these are lifted) and for the possible presence of heat exchangers.

### EXPOSITION AND ADVANTAGES OF THE FINDING

Object of the present finding is to remedy the abovelamented drawbacks by providing a cooker apparatus comprising a conveyance system constituted by a series of rods/bars made of stainless steel and spaced from each other, in order to facilitate the cleaning as well as allow a free view of the cooking tank.

A second object of the finding is to supply a transmission system for the steel rods/bars (and hence of the sheet of pasta dough) outside the cooking tank, so as to limit if not eliminate the contact with starches and boiling water, as well as limit/eliminate maintenance.

Another object is to be able to have a cooker with total or partial extraction system for the bars forming the surface of advancement. This occurs with the arrangement of means for lifting the cooking surface defined by the rods; the total extraction is for cleaning; the partial extraction (first few meters) serves to give flexibility in the cooking times (immersion in water), in the case of production of sheet of pasta dough of different sizes (different sheet of pasta dough advancement speeds).

Another object is to create a vapor-water heat exchange by means of the same cooking tank; the bottom of the tank comprising at least one air space on the bottom for the passage of the vapor; this will allow:
- the use of non-food grade vapor
- increasing the turbulence of the vapor itself between the plates, so as to improve the heat exchange
- increasing the exchange surface (the entire bottom of the tank)
- limiting the quantity of water since the tank can only contain the sheet of pasta dough and not heat exchange elements
- facilitating the cleaning since it is internally smooth, without any internal element.

Another object is to have a cooker with lower tank separated from the cooking tank, in order to be able to wash/sanify the round bars before their return into the cooking tank.

With regard to the extraction of the starch from the cooking water such problem discussed above, now the entire perimeter of the tank allows the overflow of the cooking water and hence the discharge of the surface foams, with improved and more uniform quality of the cooking water.

The system here described and claimed will be anyhow much easier to clean also thanks to the round bars (fixed and movables) which can be lifted out of the tank.

Said objects and advantages are all achieved by the cooking apparatus, object of the present finding, which is characterized for that provided in the below-reported claims.

### BRIEF DESCRIPTION OF THE FIGURES

This and other characteristics will be more visible from the following description of several embodiments illustrated as a merely non-limiting example in the enclosed set of drawings.
- Figure 1: illustrates the cooking apparatus, object of the finding, in machine cleaning configuration,
- Figure 2: illustrates the cooking apparatus object of the finding in configuration of loading the sheet of pasta dough inside the apparatus itself.
- Figure 3: illustrates the cooking apparatus object of the finding in cooking configuration.

### DESCRIPTION OF THE FINDING

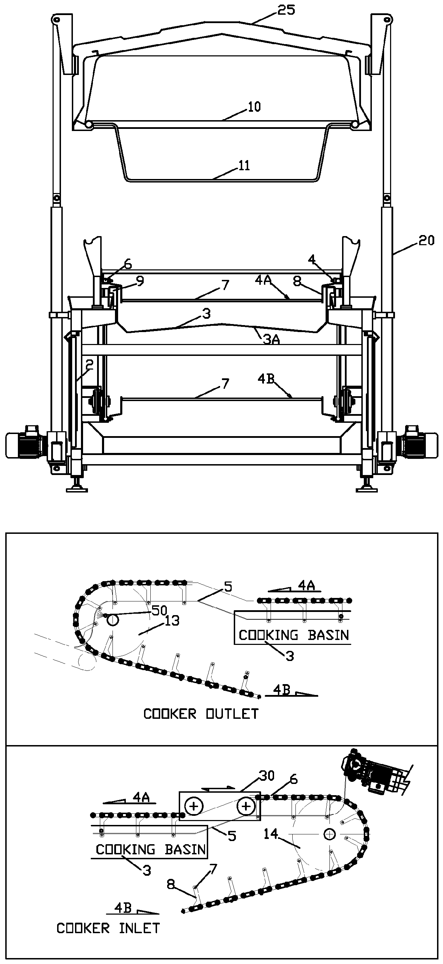

With particular reference to figures 1, 2 and 3, reference number 100 indicates in its entirety a continuous cooker apparatus, i.e. machinery adapted to cooking sheet of pasta dough; driving means immerse the sheet of pasta dough inside a tank containing boiling water, maintaining it for the necessary cooking time.

As said above, the prior art makes use of a transport system/means composed of at least one conveyor belt made of metal net, or alternatively made of plastic modular elements.

The present device 1 has an external framework 2, with vertical uprights and isolation walls, for sustaining and supporting the means constituting the machine.

More precisely, the presence of cooking means is observed, such as at least one steel tank 3, situated inside said framework 2, by means of supports 9; the tank being adapted to containing boiling water through the exchange system described below.

In addition, the presence of at least one transport system 4 is observed, for picking up and conveying the sheet of pasta dough 5 to be immersed in the tank 3.

The transport system 4 completes a closed-loop path on respective wheels 13 and 14, one of which serves as driving means for a pair of catenaries 6; the wheels 13 and 14 are placed at the start and end of the line, i.e. at the ends of the cooker 1.

The catenaries 6 are arranged longitudinally and on the external sides of the tank 3.

Therefore, and with reference to the figures, the transport system 4 identifies two advancement surfaces 4A and 4B: the first upper surface is adapted to carry the sheet of pasta dough 5 in advancement and immersion in the tank 3, while the other lower surface is external and actuates the empty return phase below said tank 3.

Said catenaries 6 in turn carry - in advancement - a plurality of bars/sections 7 spaced from each other so as to form the relative aforesaid surface 4A or 4B. Said bars/sections 7 are made of stainless steel and arranged transverse to the advancement of the sheet of pasta dough 5 in the tank 3.

It is specified that with the term bars/sections 7, it is desired to indicate a type of means with any section and nearly linear extension typical of rods, bars or sections. This allows the simplest replacement of the rods as well as facilitated cleaning thereof, with respect to the mesh systems of known type.

As is inferred from the figures, the transmission system constituted by the catenaries 6 and relative drive wheels 13, 14 is situated outside the tank; in order to allow the bars/sections 7 to be immersed in the tank 3 between the bars 7 and the catenary 6, spacer means are interposed which in the embodiment are vertically-arranged rods 8.

The catenary 6 - rods 8 - bars 7 set is maintained together by coupling systems of known type. In other words, each branch 4A and 4B of advancement in the tank and return therefrom, according to the illustrations, is U-shaped with the ends of said "U" retained by the catenaries, while the rest is retained by the described set 7 and 8.

The system for conveying the sheet of pasta dough 5 comprises, in addition to the movable advancement 4A, also a fixed system 10 adapted to maintain said sheet of pasta dough 5 in position and preventing the free floating thereof.

The system 10 comprises a series of pressure elements 11 such as bars or drawn elements or alternatively a planar surface. Preferably the pressure elements 11 are not arranged like the underlying support sections 7, but rather are arranged like a fishbone, hence angled, with respect to the advancement of the sheet of pasta dough 5 inside the tank 3.

The cooker 1 also comprises lifting means 20, 30, 40 respectively for:
- a covering cover 25, lifting relative to the structure 2,
- the cooking advancement surface 4A, lifting relative to the structure 2 and particularly to the tank 3,
- the pressure element system 10, lifting relative to the conveyor system 4 and particularly to the upper surface 4A.

Preferably said lifting means are cylinders with pneumatic or electromechanical actuation.

With reference to figure 1, the cooker 1 is observed in cleaning configuration; all the actuation means 20, 30 e 40 have been actuated: the surface 4A is lifted and comes out of tank3, system 10 is spaced with respect to the surface 4A of the bars 7, and the cover 25 is lifted.

That described above allows having a cooker with total and/or partial extraction system of the bars 7 forming the advancing surface. The total extraction will be convenient for cleaning; while the partial extraction (first few meters) will serve to give flexibility in the cooking times (immersion in water) in the case of production of sheet of pasta dough of different sizes (different sheet of pasta dough advancement speeds).

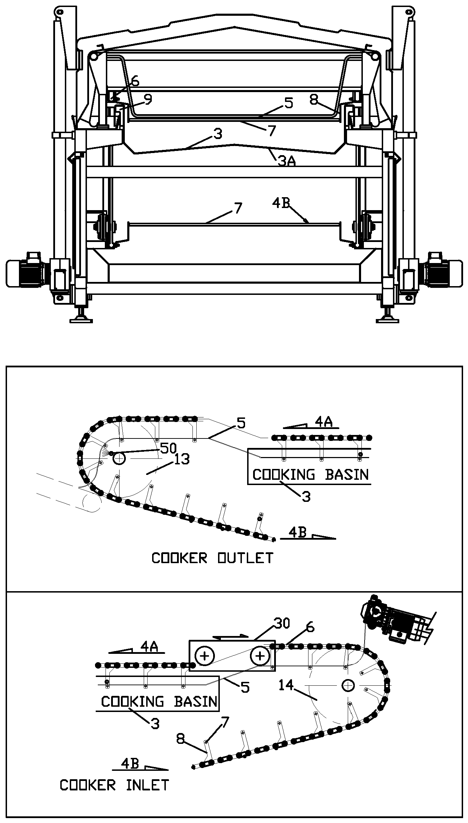

With reference to figure 1, the cooker 1 is observed in a possible sheet of pasta dough 5 loading configuration; in such case, the surface 4A is arranged in position inside tank 3 and beneath the free surface of the cooking water, while the system 10 is lifted to allow the sheet of pasta dough 5 to be picked up in driving; once the loading of the sheet of pasta dough is executed, cover and system 10 are lowered and arranged as in figure 2, the sheet of pasta dough 5 is situated between the surface of the movable bars 7 and that of the fixed means 11 and advances by means of the advancement of the bars 7, which are themselves in turn driven by the external means 6.

With regard to the vapor-water heat exchange, this is obtained by means of the same cooking tank 3; the bottom 3A of the tank in fact comprises a double bottom made of metal sheets welded together, in a manner such that, at their interior, a passage section for the vapor is created. The vapor passing into the bottom 3A transfers heat to the sheet, which in turn heats the water and brings it to a boil.

In the embodiment, reference is made to an apparatus 1 for cooking sheet of pasta dough 5 with means 30 for lifting rods 7, lifting relative to the structure 2 and tank 3. The means 30 are preferably arranged two by two at the start and at the end of the cooking line such that with one of the two pairs of means 30 it is possible to lift the entire catenary 6 and relative bars 7.

Nevertheless, without departing from the protective scope, there may also be more than two pairs of means 30, arranged at intermediate with respect to those at the ends so as to delay or anticipate the entry or exit of the sheet of pasta dough 5 into/out of the tank: The total extraction is for cleaning; the partial extraction (first few meters) serves to give flexibility in the cooking times (immersion in water) in the case of production of sheet of pasta dough of different sizes.

Finally, the tank 3 is provided with perimeter overflow which allows the overflow of the cooking water over the entire perimeter thereof and hence the discharge of the surface foams, with improved and more uniform quality of the cooking water.

## Claims

1. Apparatus (1) for cooking sheet of pasta dough (5), of the type comprising an external framework (2), with vertical uprights and isolation walls for sustaining and supporting the means constituting the machine; cooking means comprising at least one steel cooking tank (3), inside said framework (2), and adapted to contain cooking water, at least one transport system (4) for picking up and conveying the sheet of pasta dough (5) to be immersed in the cooking tank (3); said transport and conveyance system (4) identifies two advancement surfaces (4A) and (4B) in which the first upper surface (4A) is adapted to carry the sheet of pasta dough (5) in advancement and immersion in the tank (3), while the other lower surface (4B) is external and actuates the empty return phase below said tank (3); and completes a closed-loop path on respective wheels (13) and (14), one of which serves as driving means for a pair of catenaries (6); the wheels (13) and (14) are placed at the start and end of the cooker (1); said transport and conveyance system (4) being formed by a series of rods/bars (7) spaced from each other, so as to form the two advancement surfaces (4A) and (4B), and arranged transverse to the advancement of the sheet of pasta dough (5) in the tank (3) **characterized in that** said catenaries (6) are arranged longitudinally and on the external sides of the tank (3); and wherein
a. A transmission system for said rods/bars (7) and sheet of pasta dough (5) is provided outside the cooking tank;
b. A pressure element system (10) maintains said sheet of pasta dough (5) in position, preventing it from freely floating.

2. Apparatus (1) for cooking sheet of pasta dough (5) according to claim 1 **characterized in that** it comprises means (30) for lifting the rods (7), relative to the structure (2) and tank (3).

3. Apparatus (1) for cooking sheet of pasta dough (5) according to claim 1 **characterized in that** the cooking tank (3) has a bottom (3A) with section that allows the passage of vapor, thus creating a vapor-water heat exchange through the tank itself; the vapor passing into the bottom (3A) transfers heat to the sheet.

4. Apparatus (1) for cooking sheet of pasta dough (5) according to claim 1 **characterized in that** between the bars (7) and the catenary (6), spacer means (8) are interposed that are arranged vertically.

5. Apparatus (1) for cooking sheet of pasta dough (5) according to claim 1 **characterized in that** the system (10) comprises a series of pressure elements (11), such as bars or drawn elements or alternatively a planar surface; said pressure elements (11) not being arranged as the underlying support sections (7) but arranged angled with respect to the advancement of the sheet of pasta dough (5) within the tank (3).

6. Apparatus (1) for cooking sheet of pasta dough (5) according to claim 1 **characterized in that** it comprises means 40 for lifting the pressure element system 10, lifting relative to conveyor system 4 and particularly to the surface of the advancing rods 7.

7. Apparatus (1) for cooking sheet of pasta dough (5) according to claim 1 and 2 **characterized in that** the lifting means (30) are arranged in pairs on both sides of the tank and operate so as to lift the relative catenary; more than two pairs may also be provided and the added means will be arranged in an intermediate position with respect to the end ones so as to delay or anticipate the entry or exit of the sheet of pasta dough (5).

8. Apparatus (1) for cooking sheet of pasta dough (5) according to claim 1 **characterized in that** the tank (3) comprises an overflow of the cooking water over the entire perimeter thereof.

## Patentansprüche

1. Vorrichtung (1) zum Kochen von Blättern von Lebensmittelteig (5), des Typs umfassend einen Außenrahmen (2) mit vertikalen Pfosten und isolierenden Wänden zum Unterstützen und Tragen von Maschine bildenden Mitteln; Kochmittel, die mindestens einen Stahlkochbehälter (3) im Rahmen (2) umfassen und Kochwasser enthalten können, und mindestens ein Transportsystem (4) zum Aufnehmen und Transportieren die Blätter des Lebensmittelteigs (5) zum Eintauchen in dem Kochtankbehälter (3); das Transport- und Transfersystem (4) identifiziert zwei Fortschrittflächen (4A, 4B), wobei die erste obere Fläche (4A) derart angepasst ist, um das Blatt von Lebensmittelteig (5) nach vorne zu tragen und in den Behälter (3) einzutauchen, während die andere untere Fläche (4B) ist extern und aktiviert die Vakuumrücklaufphase unterhalb des Behälters (3), wobei ein geschlossener Kreislaufweg auf den jeweiligen Rädern (13, 14) beendet wird, von denen eines als Steuermittel für ein Paar Oberleitungen (6) dient; wobei die Räder (13, 14) sind angeordnet stromaufwärts und stromabwärts der Kochvorrichtung (1), wobei die Transport- und Transfersysteme (4) durch eine Reihe von Stangen und Stäben (7) gebildet sind, die voneinander beabstandet sind und zwei Fortschrittflächen (4A, 4B) bilden, und quer zum Fortschritt des Blattes von Lebensmittelteig (5) in dem Behälter (3) angeordnet sind, **dadurch gekennzeichnet, dass** die Oberleitung (6) in Längsrichtung und an den Außenseiten des Behälters (3) angeordnet ist, und wobei:
a. ein Übertragungssystem für die Stangen/Stäbe (7) und das Blatt von Lebensmittelteig (5) außerhalb des Kochbehälters vorgesehen ist;
b. ein Druckelementsystem (10) hält das Blatt von Lebensmittelteig (5) in Position, und verhindert, dass es frei schwimmt.

2. Vorrichtung (1) zum Kochen von Blättern von Lebensmittelteig (5) nach Anspruch 1, **dadurch gekennzeichnet, dass** sie Mittel (30) zum Anheben der Stangen (7) relativ zur Struktur (2), und einen Behälter (3), umfasst.

3. Vorrichtung (1) zum Kochen von Blättern von Lebensmittelteig (5) nach Anspruch 1, **dadurch gekennzeichnet , dass** der Kochbehälter (3) einen Boden (3A) mit einem Abschnitt aufweist, der den Durchgang eines Dampfes derart ermöglicht, wodurch ein Dampf-Wasser-Wärmeaustausch durch den Behälter selbst erzeugt wird; der im Boden (3A) strömende Dampf überträgt Wärme auf das Blatt.

4. Vorrichtung (1) zum Kochen von Blättern von Lebensmittelteig (5) nach Anspruch 1, **dadurch gekennzeichnet**, das zwischen den Stangen (7) und der Oberleitung (6) Distanzmittel (8) vertikal angeordnet sind.

5. Vorrichtung (1) zum Kochen von Blättern von Lebensmittelteig (5) nach Anspruch 1, **dadurch gekennzeichnet, dass** das System (10) entweder eine Reihe von Druckelementen (11), wie Stäbe oder gezogene Elemente, oder alternativ eine flache Oberfläche umfasst; die Druckelemente (11) sind nicht als untere Stützabschnitte (7) angeordnet, aber sie sind in einem Winkel relativ zu der Fortschrittsbewegung des Blattes von Lebensmittelteigs (5) innerhalb des Behälters (3) angeordnet.

6. Vorrichtung (1) zum Kochen von Blättern von Lebensmittelteig (5) nach Anspruch 1, **dadurch gekennzeichnet, dass** sie Mittel 40 zum Heben des Drucksystemelements 10 in Bezug auf das Übertragungssystem 4 und insbesondere in Bezug auf die Oberfläche der Fortschrittstangen 7, umfasst.

7. Vorrichtung (1) zum Kochen von Blättern von Lebensmittelteig (5) nach Anspruch 1 und 2, **dadurch gekennzeichnet , dass** die Hebemittel (30) paarweise auf beiden Seiten des Behälters angeordnet sind und sind derart ausgestattet, dass sie die jeweilige Oberleitung anheben; mehr als zwei Paare können auch vorgesehen sein und die Zusatzmittel in einer Zwischenposition in Bezug auf die Ende angeordnet sind, um den Eintritt oder Austritt der Blätter von Lebensmittelteigs (5) zu verzögern oder antizipieren.

8. Vorrichtung (1) zum Kochen von Blättern von Lebensmittelteig (5) nach Anspruch 1, **dadurch gekennzeichnet, dass** der Behälter (3) eine Überströmung von Kochwasser entlang des gesamten Umfangs desselben umfasst.

## Revendications

1. Dispositif (1) pour la cuisson des feuilles de pâte alimentaires (5) selon la revendication 1, du type comprenant un cadre extérieur (2) avec des montants verticaux et des parois isolantes pour soutenir et supporter les moyens formant la machine; des moyens de cuisson comprenant au moins un réservoir de cuisson en acier, à l'intérieur du cadre (2), et apte à contenir de l'eau de cuisson, au moins un système de transport (4) pour prélever et transporter la feuille de pâte alimentaire (5) pour une immersion dans le réservoir de cuisson (3); le système de transport et de transfert (4) identifie deux surfaces d'avancement (4A, 4B), dans lequel la première surface supérieure (4A) est apte à porter la feuille de pâte alimentaire (5) en avancement et en immersion dans le réservoir (3), tandis que l'autre surface inférieure (4B) est extérieure et actionne la phase de retour à vide au dessous du réservoir (3), en terminant un parcours à circuit fermé sur les respectives roues (13, 14), une desquelles sert comme moyen d'agencement pour un couple de caténaires (6); les roues (13, 14) sont disposées amont et aval du dispositif de cuisson (1), les système de transport et de transfert (4) étant formé par une série de tiges et de barres (7) espacées, en formant les deux surfaces d'avancement (4A, 4B), et sont disposées transversales par rapport à l'avancement de la feuille de pâte alimentaire (5) dans le réservoir (3), **caractérisé en ce que** les caténaires (6) sont disposées longitudinalement et sur les côtés extérieurs du réservoir (3); et dans lequel:
a. un système de transmission pour les tiges/barres (7) et la feuille de pâte alimentaire (5) est disposée à l'extérieur du réservoir de cuisson ;
b. un système d'éléments de pression (10) maintient ladite feuille de pâte alimentaires (5) en position, en empêchant sa flottaison libre.

2. Dispositif (1) pour la cuisson de feuilles de pâtes alimentaires (5) selon la revendication 1, **caractérisé en ce qu'**il comprend des moyens (30) pour soulever les tiges (7), par rapport à la structure (2) et un réservoir (3).

3. Dispositif (1) pour la cuisson de feuilles de pâtes alimentaires (5) selon la revendication 1, **caractérisé en ce que** le réservoir de cuisson (3) présente un fond (3A) avec une section de manière à permettre le passage d'une vapeur, créant ainsi un échange de chaleur vapeur-eau à travers le réservoir lui-même; la vapeur passant à l'intérieur du fond (3A) transmet la chaleur à la feuille.

4. Dispositif (1) pour la cuisson de feuilles de pâtes alimentaires (5) selon la revendication 1, **caractérisé en ce qu'**entre les barres (7) et la caténaire (6) sont interposés des moyens d'écartement (8) disposés verticalement.

5. Dispositif (1) pour des la cuisson de feuilles de pâtes alimentaires (5) selon la revendication 1, **caractérisé en ce que** le système (10) comprend une série d'éléments de pression, tels que des barres ou des éléments traînés ou en variante une surface plane; les éléments de pression (11) ne sont pas disposés comme les sections de support (7) sous-jacentes, mais ils sont disposés à un angle par rapport à l'avancement de la feuille de pâtes alimentaires (5) à l'intérieur du réservoir (3).

6. Dispositif (1) pour la cuisson de feuilles de pâtes alimentaires (5) selon la revendication 1, **caractérisé en ce qu'**il comprend des moyens 40 pour soulever les éléments du système de pression 10, qui sont soulevés par rapport au système de transmission 4 et notamment par rapport à la surface des tiges d'avancement 7.

7. Dispositif (1) pour la cuisson de feuilles de pâtes alimentaires (5) selon la revendication 1 et 2, **caractérisé en ce que** les moyens de levage (30) sont disposés par paires sur les deux côtés du réservoir et fonctionnent de façon à soulever la respective caténaire; plus de deux paires peuvent également être prévues et les moyens ajoutés sont disposés dans une position intermédiaire par rapport aux extrémités, de manière à retarder ou anticiper l'entrée ou la sortie de la feuille de pâtes alimentaires (5).

8. Dispositif (1) pour la cuisson de feuilles de pâtes alimentaires (5) selon la revendication 1, **caractérisé en ce que** le réservoir (3) comprend un excès de débit d'eau de cuisson le long de tout le périmètre du même.
